# EUROPEAN PATENT APPLICATION

(11) **EP 4 607 350 A1**
(43) Date of publication of application: **27.08.2025**
(21) Application number: 23878977.0
(22) Date of filing: 09.10.2023
(51) Int. Cl.: G06F 9/50

(54) **UNLOADING CARD PROVIDED WITH ACCELERATOR**

(30) Priority: 17.10.2022 CN 202211268202
(71) Applicant: Cloud Intelligence Assets Holding (Singapore) Private Limited, Singapore 189554 (SG)
(72) Inventor: ZHANG, Zhengxian, Beijing 100102 (CN)
(74) Representative: Barker Brettell LLP
(86) International application number: PCT/CN2023/123519
(87) International publication number: WO 2024/082985

(57) **Abstract**

An embodiment of the present specification provides an offload card installed with an accelerator. The offload card is configured to: receive a data processing request, where the data processing request carries data to be processed; and upon determining that a data type of the data to be processed satisfies a processing condition from the offload card, process the data to be processed, and feedback a data processing result obtained; or upon determining that a data type of the data to be processed satisfies a processing condition from the accelerator, transmit the data to be processed to the accelerator, and feedback a data processing result obtained by the accelerator. Therefore, it is possible to avoid a problem that it is difficult to regulate and control CPU resources since performance of the CPU may vary due to CPUs installed with different types of accelerators or installed with no accelerator, and the objections of improved performance of the CPU and reduced pressure for the CPU are achieved.

## Description

This application claims priority to Chinese Patent Application No. 202211268202.5, filed with the China National Intellectual Property Administration on October 17, 2022 and entitled "Offload Card Installed with Accelerator", which is incorporated herein by reference in its entirety.

### TECHNICAL FIELD

Embodiments of the present specification relate to the field of data processing technology and, in particular, to an offload card installed with an accelerator.

### BACKGROUND

With the continuous development of computer technology, in order to further improve the performance of a CPU (central processing unit) and reduce the pressure for the CPU, some CPU manufacturers will choose to install various types of accelerators in CPUs for the purpose of improving the performance of the CPU and reducing the pressure for the CPU.

However, in a cloud computing scenario, with use of CPUs produced by various manufacturers, it is difficult to regulate and control CPU resources since performance of the CPUs may vary due to a fact that the CPUs produced by various manufacturers are installed with different types of accelerators or installed with no accelerator.

### SUMMARY

In light of this, embodiments of the present specification provide an offload card installed with an accelerator. One or more embodiments of the present specification simultaneously involve a data processing method, a data processing apparatus, a data processing system, a computer-readable storage medium and a computer program, to solve the technical defects existing in the prior art.

In a first aspect, an embodiment of the present specification provides an offload card installed with an accelerator,
where the offload card is configured to:
receive a data processing request, where the data processing request carries data to be processed; and
upon determining that a data type of the data to be processed satisfies a processing condition from the offload card, process the data to be processed, and feedback a data processing result obtained; or
upon determining that a data type of the data to be processed satisfies a processing condition from the accelerator, transmit the data to be processed to the accelerator, and feedback a data processing result obtained by the accelerator.

In a second aspect, an embodiment of the present specification provides a data processing method, applied to an offload card installed with an accelerator, where the method includes:
receiving a data processing request, where the data processing request carries data to be processed; and
upon determining that a data type of the data to be processed satisfies a processing condition from the offload card, processing the data to be processed, and feeding back a data processing result obtained; or
upon determining that a data type of the data to be processed satisfies a processing condition from the accelerator, transmitting the data to be processed to the accelerator, and feeding back a data processing result obtained by the accelerator.

In a third aspect, an embodiment of the present specification provides a data processing system, including: a CPU, a memory, and an offload card installed with an accelerator;
where the offload card is configured to:
receive a data processing request, where the data processing request carries data to be processed; and
upon determining that a data type of the data to be processed satisfies a processing condition from the offload card, process the data to be processed, and feedback a data processing result obtained to the memory; or
upon determining that a data type of the data to be processed satisfies a processing condition from the accelerator, transmit the data to be processed to the accelerator, and feedback a data processing result obtained by the accelerator to the memory;
where the CPU is configured to obtain the data processing result from the memory.

In a fourth aspect, an embodiment of the present specification provides a data processing apparatus, applied to an offload card installed with an accelerator, where the apparatus includes:
a receiving module, configured to receive a data processing request, where the data processing request carries data to be processed; and
a first processing module, configured to: upon determining that a data type of the data to be processed satisfies a processing condition from the offload card, process the data to be processed, and feedback a data processing result obtained; or
a second processing module, configured to: upon determining that a data type of the data to be processed satisfies a processing condition from the accelerator, transmit the data to be processed to the accelerator, and feedback a data processing result obtained by the accelerator.

In a fifth aspect, an embodiment of the present specification provides a computer-readable storage medium storing a computer-executable instruction, where when the instruction is executed by a processor, steps of the foregoing data processing method applied to the offload card are implemented.

In a sixth aspect, an embodiment of the present specification provides a computer program, where when the computer program is executed in a computer, the computer is enabled to perform steps of the foregoing data processing method applied to the offload card.

The embodiment of the present specification provides an offload card installed with an accelerator, and the offload card is configured to: receive a data processing request, where the data processing request carries data to be processed; and upon determining that a data type of the data to be processed satisfies a processing condition from the offload card, process the data to be processed, and feedback a data processing result obtained; or upon determining that a data type of the data to be processed satisfies a processing condition from the accelerator, transmit the data to be processed to the accelerator, and feedback a data processing result obtained by the accelerator.

The present specification provides an offload card installed with an accelerator. By installing the accelerator onto the offload card, it is possible to avoid a problem that it is difficult to regulate and control CPU resources since performance of the CPU may vary due to CPUs installed with different types of accelerators or installed with no accelerator. Moreover, upon determining that a data processing request carries data to be processed whose data type satisfies a processing condition from the accelerator, the offload card transmits the data to be processed to the accelerator, and feeds back a data processing result obtained by the accelerator, therefore, the objections of improved performance of the CPU and reduced pressure for the CPU are achieved.

### BRIEF DESCRIPTION OF DRAWINGS

FIG. 1 is a structural diagram of a CPU scheme with accelerators according to an embodiment of the present specification.
FIG. 2 is an application diagram of a CPU scheme with accelerators according to an embodiment of the present specification.
FIG. 3 is a structural diagram of an offload card plus a CPU scheme according to an embodiment of the present specification.
FIG. 4 is an application diagram of an offload card plus a CPU scheme according to an embodiment of the present specification.
FIG. 5 is a schematic application diagram of an offload card installed with accelerators according to an embodiment of the present specification.
FIG. 6 is a schematic application diagram of an offload card according to an embodiment of the present specification.
FIG. 7 is a schematic diagram of an interaction between an offload card installed with accelerators and a CPU according to an embodiment of the present specification.
FIG. 8 is a schematic application diagram of an offload card installed with accelerators according to an embodiment of the present specification.
FIG. 9 is a flowchart of a data processing method according to an embodiment of the present specification.
FIG. 10 is a schematic structural diagram of a data processing apparatus according to an embodiment of the present specification.
FIG. 11 is a schematic structural diagram of a data processing system according to an embodiment of the present specification.

### DESCRIPTION OF EMBODIMENTS

In the following description, many specific details are described for facilitating comprehensive understanding of the present specification. However, the present specification can be implemented in various manners other than those described herein. Persons skilled in the art can make similar extensions without departing from the principle of the present specification. Therefore, the present specification is not limited to the following disclosed embodiments.

The terms used in one or more embodiments of the present specification are merely for the purpose of describing specific embodiments, but are not intended to limit the one or more embodiments of the present specification. Singular forms such as "a", "the" and "this" used in one or more embodiments of the present specification and the appended claims are also intended to include plural forms unless other meanings are explicitly indicated in the context. It will also be appreciated that the term "and/or" as used in one or more embodiments of the present specification refers to and includes any of or all of possible combinations of one or more associated items listed.

It will be appreciated that although the terms such as "first", "second" and the like may be used in one or more embodiments of the present specification to describe various information, such information should not be limited to these terms. These terms are only used to distinguish the same type of information. For example, without departing from the scope of one or more embodiments of the present specification, the first may also be referred to as the second; similarly, the second may also be referred to as the first. Depending on the context, the word "if" as used herein can be interpreted as "upon..." or "when..." or "in response to determining".

Firstly, explanations will be given to the terminologies involved in one or more embodiments of the present specification.

Offload Card: it is a chip. The chip is a dedicated processor designed for a cloud data center, specifically for connecting hardware within servers and virtualized resources in the cloud; and it can take the place of a CPU to become a control and acceleration center for cloud computing, which means that the offload card can be a chip, such as a cloud-native chip, or a processor.

Cloud-native chip: from the perspective of a computing chip, cloud computing brings new application scenarios, thus proposing new demands for a CPU. The cloud-native chip is a dedicated chip used in cloud computing scenarios to replace the CPU. The cloud-native chip includes an offload card.

Accelerator: it is a hardware accelerator for various specific applications, designed to replace inefficient software operation in a CPU, thereby significantly improving the performance of specific applications while freeing up the CPU's computing power for other general loads. The accelerator includes but is not limited to accelerators such as AMX, an AI accelerator, an ML engine, an HPC accelerator, a security coprocessor, and a GPU.

AI accelerator: it is a class of specialized hardware accelerators or computer systems designed to accelerate artificial intelligence applications, especially artificial neural networks, machine vision, and machine learning.

ML engine: a machine learning (Machine Learning, abbreviated as ML) engine.

AI: referring to Artificial Intelligence (Artificial Intelligence, abbreviated as AI in English).

AMX: it represents Advanced Matrix Extension, which is a matrix operation programming framework aimed at accelerating workloads of machine learning.

HPC accelerator: it represents a High Performance Computing accelerator, which generally refers to a high-energy computing accelerator with the ability to process data at a high speed and perform complex computation.

Security coprocessor: it is an extra independent hardware module additional to a core of a CPU, for handling secure key management, key generation, encryption and decryption, or other transactions.

GPU: representing a graphics processing unit (graphics processing unit, abbreviated as GPU).

CPU die: it refers to a core of a CPU, which is the most essential component of the CPU.

Offload card: in order to improve the processing speed of input/output (Input/Output, I/O) services in a cloud scenario, operators may offload some I/O services from a server to low-cost heterogeneous hardware for execution, so that resources of a central processing unit (Central Processing Unit, abbreviated as CPU) of the server can be released and the operation efficiency of the CPU can be improved. Such heterogeneous hardware used for offloading I/O data are commonly known as an offload card; and the offload card can be a separate peripheral component interconnect express (Peripheral Component Interconnect Express, PCIe) card which establishes a PCIe channel with the server, and the server, when handling the I/O services offloaded to the offload card, transmits, through the PCIe channel, the data to the offload card for processing, where the PCIe channel is mainly used for communications of the I/O services.

IDC: it generally refers to an internet data center. The internet data center (Internet Data Center, abbreviated as IDC) refers to a facility with comprehensive equipment (including a high-speed internet access bandwidth, a high-performance local area network, secure and reliable machine room environments, etc.), professional management and comprehensive application service platforms.

CPU socket: a processor socket.

RAM (Random Access Memory, abbreviated as RAM): referring to a random access memory, also known as a memory or a main memory.

DMA (Direct Memory Access, Direct Memory Access): a key feature of all modern computers, it allows hardware devices at different speeds to communicate without a large quantity of interrupt loads depending on a CPU. Otherwise, the CPU would need to copy information per piece from a source to a register and then write it again to a new location. During this time, the CPU would be unavailable for other tasks.

IAAS (Infrastructure as a Service): it represents an infrastructure as a service, which refers to a service mode in which an IT infrastructure is provided, as a service, outwards over a network and charging is performed based on actual usage or occupancy of resources by users.

RoCE: it represents RDMA over Converged Ethernet, which is a network protocol that allows an application to achieve remote memory access over Ethernet. Currently, the RoCE has two protocol versions, v1 and v2. RoCE v1 is a link-layer protocol that allows any two hosts within the same broadcast domain to directly access each other. RoCE v2 is an Internet-layer protocol that enables a routing function.

InfiniBand: it literally means an "infinite bandwidth" technology, abbreviated as IB, which is a computer network communication standard used for high-performance computing. It has extremely high throughput and extremely low latency for data interconnection between computers. InfiniBand is also used for direct or switched interconnection between a server and a storage system, as well as interconnection between storage systems.

With the continuous development of computer technology, CPUs (Central Processing Unit) are also constantly progressing. However, limited by Moore's Law, the current development of the CPUs has two routes: one is to continuously improve single-core performance by integrating hardware accelerators within a CPU die; and the other is to increase core density, but with relatively slow improvement of the single-core performance. In this situation, since cloud manufacturers will use CPUs from various manufacturers simultaneously, and these CPUs have different acceleration capabilities, for example, the AI engine only resides in CPUs from specific manufacturers rather than other CPU platforms, therefore, after construction of a CPU resource pool based on CPUs with different acceleration capabilities, such heterogeneous CPU resource pool would not be very friendly to cloud-native services, causing it difficult to regulate and control CPU resources.

Furthermore, in a cloud-native scenario, the current offload card (which may be a chip or a processor) only supports general network traffic or storage traffic offloading, general encryption and decryption and other capabilities, and has limited acceleration capabilities for AI (Artificial Intelligence (Artificial Intelligence), abbreviated as AI in English), HPC (High Performance Computing (High Performance Computing) for short) and ML (Machine Learning (Machine Learning, abbreviated as ML)), still relying on CPU computing power and accelerators in the CPU for completion.

In light of the above-described problem, the present specification provides four schemes to address the aforementioned problem. The first scheme is: a CPU scheme with accelerators.

Since the current CPU is actually a product of development of an offline IDC, the offline IDC is generally a single customer with no diversified CPU requirements, hence only one type of CPU can be chosen to support data processing work. Therefore, it is a preferred solution to use CPUs with hardware accelerators for vertical services such as AI, ML and HPC.

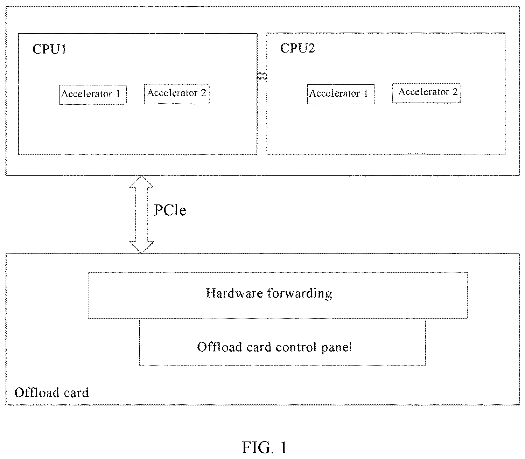

Reference is made to FIG. 1, which is a schematic structural diagram of a CPU scheme with accelerators according to an embodiment of the present specification. In the drawings, a CPU is installed with an accelerator 1 and an accelerator 2. Moreover, the CPU is connected to an offload card via PCIe. The offload card includes an offload card control panel for controlling various operations of the offload card, and meanwhile the offload card further includes a hardware forwarding module for forwarding data to the CPU. It should be noted that the CPU further includes a core (processor core), an L3 cache (level 3 cache), and an IMC (integrated memory controller of the CPU). The CPU is connected to a RAM.

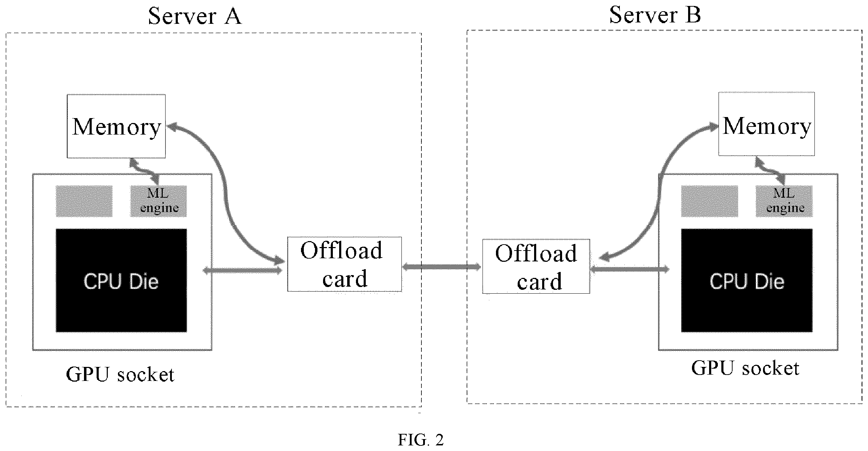

Reference is made to FIG. 2, which is a schematic application diagram of a CPU scheme with accelerators according to an embodiment of the present specification. In the drawing, a CPU die is installed in a CPU socket (processor socket), and the CPU is installed with an ML engine (an accelerator). The ML engine is connected to a memory, and an offload card is connected to the memory; based on this, data obtained by an ML engine in a server A will be stored in the memory connected thereto, and the data in the memory will be transmitted through the offload card to an offload card of a server B. After receiving the data, the offload card of the server B will store the data in the memory, so that the ML engine in the server B can obtain, from the memory, the data transmitted by the server A.

Based on FIG. 1 and FIG. 2 in the foregoing description, it can be known that in the CPU scheme supporting hardware accelerators, traffic data is received or transmitted through a network card, then the data is intended directly to a system memory by means of DMA, and hardware accelerators (ML engine) in a CPU later can directly process the data, thereby releasing CPU computing power.

However, since various customers have strong demands for diversified CPUs in the cloud-native era, including x86 architecture, ARM architecture, RISC-V architecture, etc., these CPUs have their respective characteristics with significantly different architectures and varied supporting capabilities, especially for hardware accelerators, there may be a case that the CPUs produced by a manufacturer A are installed with a wide range of accelerators while the CPUs produced by manufacturers B and C barely have any accelerators. In particular, since RISC-V is currently in its beginning stage, various CPU platforms differ greatly in terms of their acceleration capabilities. Therefore, the performance in such vertical categories varies greatly in different CPU platforms, and hence it is impossible to provide a unified cloud-native service capability for customers.

The second scheme is: a CPU+heterogeneous chip scheme. This scheme is advantageous in excellent performance, and being suitable for complex heavy-loaded vertical scenario services; however, it is disadvantageous in that the cost of implementing this scheme remains high, and it is not very friendly for light-loaded vertical services.

The third scheme is: an offload card+CPU scheme.

Based on this, since the offload card only has general I/O traffic offloading capabilities and general encryption/decryption and compression/decompression functions, but does not have hardware accelerators needed for vertical scenarios, this type of data can only be processed by software within the CPU, with extremely low efficiency and performance.

The fourth scheme is: a CPU scheme supporting no hardware accelerator.

This scheme can be implemented using external PCIe acceleration cards such as GPUs. After the network card receives and transmits a packet, the data is directly intended to the system memory by means of DMA, and then the CPU transports, via PCIe, the data from the system memory to the GPU memory for processing.

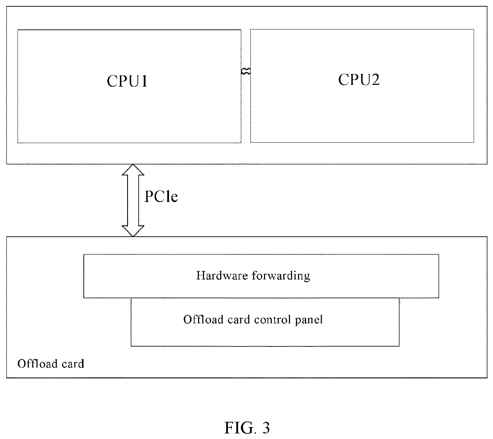

Reference is made to FIG. 3, which is a schematic structural diagram of the offload card+CPU scheme according to an embodiment of the present specification. In the drawing, the CPU is installed with no accelerator, and the CPU is connected to the offload card through PCIe. For explanations regarding the CPU and the offload card, reference can be made to corresponding explanations of FIG. 1, and details will not be described here again.

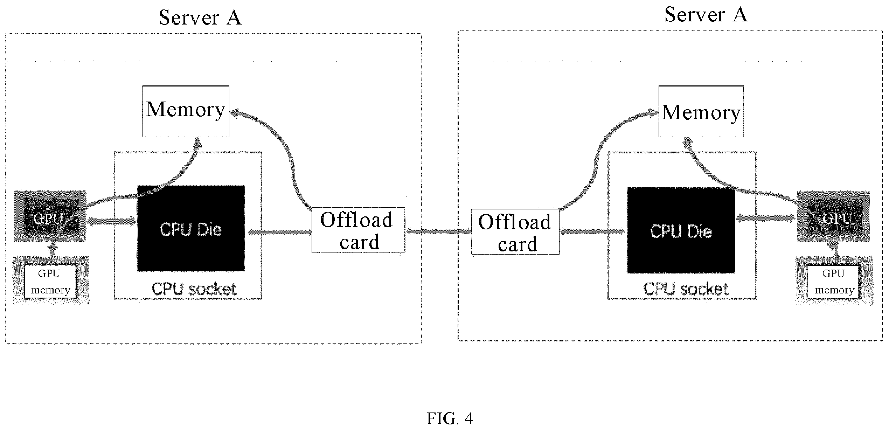

Reference is made to FIG. 4, which is a schematic application diagram of the offload card+CPU scheme according to an embodiment of the present specification. During a data processing process, the GPU in the server A will store the data into the GPU memory. The CPU will transport through PCIe the data from the GPU memory to the system memory, and transmit the data to the server B through a network card (that is, the offload card). After a network card (offload card) of the server B receives a data packet, the data is directly intended to the system memory by means of DMA, and then the CPU will transport through PCIe the data from the system memory to the GPU memory for processing.

Based on defects of the aforementioned four schemes, it can be known that these four schemes cannot completely solve the above-described technical problem. Therefore, in order to avoid the problem that it is difficult to regulate and control CPU resources due to the heterogeneous CPU resource pool being not very friendly to cloud-native services, it is extremely urgent to provide a general cloud-native infrastructure scheme to solve the problem with regard to acceleration of vertical services.

The present specification provides an offload card installed with an accelerator, and meanwhile the present specification also involves a data processing method, a data processing apparatus, a data processing system, a computer-readable storage medium and a computer program, all of which will be described in detail one by one in the following embodiments.

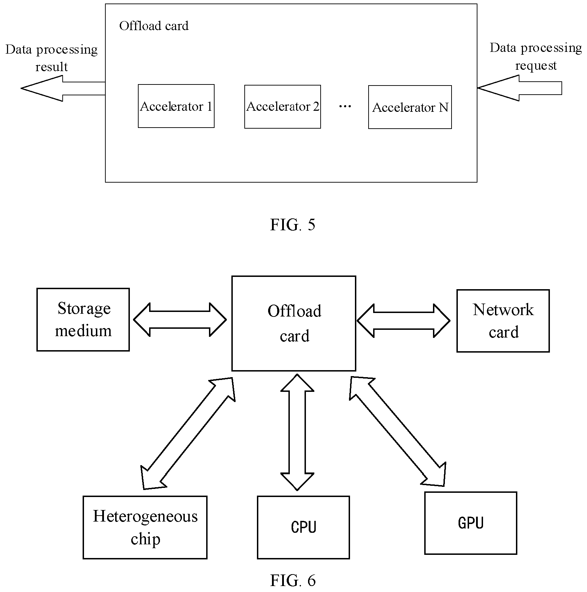

Reference is made to FIG. 5, which illustrates a schematic application diagram of an offload card installed with accelerators according to an embodiment of the present specification, where the offload card is configured to: receive a data processing request, where the data processing request carries data to be processed; and upon determining that a data type of the data to be processed satisfies a processing condition from the offload card, process the data to be processed, and feedback a data processing result obtained; or upon determining that a data type of the data to be processed satisfies a processing condition from the accelerator, transmit the data to be processed to the accelerator, and feedback a data processing result obtained by the accelerator.

It should be noted that the offload card installed with an accelerator according to the present specification can be applied to all computing products in the IAAS category of the cloud computing field, including but not limited to: an ECS (cloud sever, Elastic Compute Service in full name), a container, a serverless (serverless computing architecture, Serverless computing in full name), a microservice, etc.

The data processing request can be understood as a request that needs to be processed by the offload card, for example, the data processing request may be an AI inference request, an image rendering request, a machine learning request, an I/O traffic offloading request, or a general encryption/decryption request or the like, which is not specifically limited in the present specification. It should be noted that the offload card provided in the present specification can be a network card used for packet transmission and reception operations, and based on this, the offload card is capable of receiving the data processing request.

The data to be processed can be understood as data that needs to be processed. For example, when the data processing request is an image rendering request, the data to be processed can be an image to be rendered. For example, when the data processing request is an I/O traffic offloading request, the data to be processed can be I/O traffic data that needs to be offloaded.

The data processing result can be understood as a processing result obtained after the accelerator or the offload card processes the data to be processed. For example, the data processing result can be a rendered image, that is, an image rendering result.

The data type can be understood as data uniquely identifying a type of data to be processed. For example, when the data to be processed is an image to be rendered, the data type is an image type.

The accelerator can be understood as a hardware device reducing the computational load on the CPU and achieving computational acceleration for the CPU, including but not limited to any two types of the following accelerators: an artificial intelligence accelerator, a machine learning accelerator, a graphics processing accelerator, a data security accelerator, a computing accelerator, and other accelerators. Where the artificial intelligence accelerator refers to a specialized hardware accelerator or computer system designed to accelerate artificial intelligence applications, such as an AI accelerator. The machine learning accelerator refers to an accelerator configured to accelerate machine learning workloads or processing efficiency, such as an ML engine, AMX. The graphics processing accelerator refers to a microprocessor specific to image and graphics-related computational work, for example, the graphics processing accelerator may be a graphics processing unit (GPU). The data security accelerator refers to an apparatus that handles tasks such as secure key management, key generation, encryption and decryption, such as a security coprocessor. The computing accelerator refers to an accelerator performing high-speed data processing and executing complex computation, such as an HPC accelerator.

It should be noted that, in an embodiment provided in the present specification, the data type for processing by the accelerator includes an artificial intelligence type, a machine learning type, a graphics type, a data security type, a data computation type. Where the artificial intelligence type can be understood as a data type corresponding to artificial intelligence data supporting implementations of artificial intelligence. The graphics type can be understood as various types of graphics and images, such as jpg, png, etc. The machine learning type can be understood as a type of a training dataset, a type of a machine learning model or the like in the field of machine learning. The data computation type can be understood as a type of a dataset that requires a large amount of data computation in the field of data computation. The data security type can be understood as a data type requiring decryption, or a data type requiring encryption.

The data type satisfying the processing condition from the offload card can be understood as the data type of the data to be processed matching the data type that the offload card can process.

Additionally, in an embodiment provided in the present specification, the offload card can be configured with a data type determination strategy for the data to be processed, and when the data processing request is received, it is possible to determine, based on the data type determination strategy, a corresponding data type for the data to be processed that the data processing request carries. Specifically, the offload card can receive various types of data processing requests, such as image processing requests, machine learning requests, etc. The aforementioned requests can all carry image data. In this case, how to process the data to be processed becomes a problem that needs to be solved. Based on this, the offload card can be pre-configured with an association between the data processing request and the data type, where the association can be stored in the form of a table, for example, there is an association between an image rendering request and a graphics type. Based on this, after the offload card receives the image rendering request, the data type of the image to be rendered that the image rendering request carries is determined, based on the association, to be the graphics type. Subsequently, based on this graphics type, the image to be rendered is transmitted to a graphics processing unit rather than other accelerators for processing. In other words, according to the data processing request, a corresponding data type can be determined for the data to be processed that the data processing request carries, or a further comprehension could be that a corresponding data type can be determined for the data to be processed that the data processing request carries, according to the request type of the data processing request.

Specifically, the offload card installed with the accelerator according to the present specification can be configured in a server and can receive a data processing request, where the data processing request can be transmitted from an else server and can carry data to be processed. Upon receiving the data processing request, the offload card will determine whether the offload card itself or the accelerator installed on the offload card processes the data to be processed. Based on this, when determining that the data type of the data to be processed satisfies a processing condition from the offload card, the offload card will process the data to be processed through its own configured processor, storage medium and other hardware modules, and feedback a data processing result obtained. In other words, although the offload card is installed with the accelerator, the offload card itself can still achieve I/O traffic offloading capabilities, general encryption/decryption and compression/decompression functions, etc. Based on this, after receiving the data processing request carrying the data to be processed, the offload card will determine the data type of the data to be processed; in case of determining that the data type matches the data type that the offload card can process, the offload card will determine that the data to be processed is data that needs to be processed by itself, and hence process the data to be processed and feedback a data processing result obtained to the CPU, thereby reducing the processing pressure on the CPU and improving the performance of the CPU.

However, in case of determining that the data type of the data to be processed satisfies the processing condition from the accelerator, the data to be processed will be transmitted to the accelerator for processing by the accelerator, and the data processing result by the accelerator will be obtained and fed back. Where the data type satisfying the processing condition from the accelerator can be understood as the data type of the data to be processed being consistent with the data type that the accelerator can process.

For example, the offload card itself has I/O traffic offloading capabilities and general encryption/decryption and compression/decompression functions, which are realized through the processor and the storage medium and other hardware modules of the offload card itself. For the offload card installed with the accelerator according to the present specification, the accelerator can be installed on the offload card, so that the offload card not only has basic capabilities such as I/O traffic offloading capabilities and general encryption/decryption and compression/decompression functions, but also can realize other capabilities through the accelerator. For example, if the accelerator is an artificial intelligence accelerator, the offload card can realize artificial intelligence acceleration functions based on the artificial intelligence accelerator; and if the accelerator is a graphics processing unit (GPU), the offload card installed with the graphics processing unit can realize graphics and image processing based on the graphics processing unit.

Based on this, when the offload card receives an image rendering request carrying an image to be rendered, the offload card will determine, based on a data type of the image to be rendered (that is, an image type), that the image to be rendered needs to be processed by a graphics processing unit installed on the offload card. Therefore, the offload card transmits the image to be rendered to the graphics processing unit, and obtains an image rendering result obtained from rendering and processing by the graphics processing unit on the image to be rendered, and feeds back the image rendering result.

Alternatively, when receiving an I/O processing request carrying I/O traffic data, the offload card will determine that the I/O traffic data is to be processed by itself based on a data type of the I/O traffic data (that is, an I/O traffic type), and the offload card will process the I/O traffic data by itself and will not transmit same to the accelerator. Subsequently, the offload card will feedback the data processing result of the I/O traffic data.

In a practical application, reference can be made to FIG. 6 for an architecture diagram of the offload card in a cloud computing scenario. FIG. 6 is a schematic application diagram of an offload card according to an embodiment of the present specification. It can be seen from FIG. 6 that the offload card can be connected to a network card, a storage medium, a heterogeneous chip, a CPU and a GPU. By connecting the offload card with the network card, network acceleration can be achieved for the network card. Where the network card can be an RDAM network card. By connecting the offload card with the storage medium, storage acceleration can be achieved for the storage medium, where the storage medium can be an SSD hard drive. Meanwhile, by connecting the offload card with computing devices such as the heterogeneous chip, the CPU, the GPU and others, computing acceleration can be achieved for these computing devices. In other words, by replacing the CPU-centric architecture with the offload card, server hardware can be better utilized to obtain more virtualization resources; moreover, at the software level, the operating system to which the offload card accesses can complete the work of virtualization resource orchestration and scheduling more efficiently; at the hardware level, physical devices of the data center can be quickly managed through the offload card and acceleration can be achieved for network and storage hardware, thereby avoiding the waste of CPU computing power, and enhancing network and storage performance.

It should be noted that the offload card provided in the present specification can be a chip such as a cloud-native chip, or it can be a processor specifically designed for a cloud data center.

Based on this, by installing accelerators such as AMX accelerators, AI accelerators, ML engines, HPC accelerators, security coprocessors, or GPUs onto the offload card, after the offload card receives a data packet, a target accelerator for processing the data packet is selected from the accelerators installed on the offload card, and the data in this process only needs to be processed by the target accelerator installed on the network card (offload card), and the final processing result is returned to the system memory for ultimate processing by the CPU.

It should be noted that the offload card is installed with a processor and a memory. The processor and the memory are configured to implement capabilities the offload card possesses by its own, such as I/O traffic offloading capabilities, general encryption/decryption and compression/decompression functions, etc. It should also be noted that the processor can transmit data to be processed to an accelerator or a CPU when the data to be processed is data that requires processing by the accelerator or the CPU, and the processor can also obtain a data processing result from the accelerator. Alternatively, in an embodiment provided in the present specification, the offload card can be installed with a control unit. The control unit can determine that the data to be processed carried in the data processing request needs to be processed by the offload card, the accelerator or the CPU, and transmit the data to be processed to the processor, the accelerator or the CPU of the offload card for processing.

In an embodiment provided in the present specification, there are at least two accelerators, and the at least two accelerators process a same type of data.

In other words, at least two accelerators can be installed on the offload card provided in the present specification, and these accelerators process a same type of data. For example, at least two graphics processing units are installed on the offload card, and these graphics processing units can process image and graphic data, so that the data to be processed can be processed by the accelerators, thereby reducing the processing pressure on the CPU and improving the performance of the CPU.

In an embodiment provided in the present specification, there are at least two accelerators, and the at least two accelerators process different types of data;
correspondingly, the offload card is further configured to transmit the data to be processed to a target accelerator, and feedback a data processing result obtained by the target accelerator, where the target accelerator is one of the at least two accelerators, and the target accelerator processes a same type of data as the data type of the data to be processed.

At least two types of accelerators include, but are not limited to, any two types of the following accelerators: an artificial intelligence accelerator, a machine learning accelerator, a graphics processing accelerator, a data security accelerator, and a computing accelerator.

Specifically, the offload card provided in the present specification can be installed with at least two accelerators, but these accelerators may process different types of data. For example, the offload card is installed with an image processor and an artificial intelligence accelerator. Based on this, during a process where an accelerator is needed to process the data to be processed, the offload card needs to determine a corresponding target accelerator based on a data type of the data to be processed. Where the target accelerator is one of the at least two accelerators, and the target accelerator processes data whose type is consistent with the data type of the data to be processed, so that the accelerator processes the data to be processed, thereby reducing the processing pressure on the CPU and improving the performance of the CPU.

In an embodiment provided in the present specification, the offload card installed with the accelerator is further configured to determine a data memory cell corresponding to the target accelerator, where the data processing result obtained by the target accelerator is stored in the data memory cell, and the data processing result is obtained by the target accelerator by processing the data to be processed; and
obtain the data processing result from the data memory cell and feedback the data processing result.

The data memory cell can be understood as a storage, corresponding to the target accelerator, for storing the data required by the target accelerator during the data processing as well as the data processing result of the target accelerator. For example, if the target accelerator is a GPU, the data memory cell can be understood as a GPU memory.

For example, after transmitting the image to be rendered that the image rendering request carries to the GPU, the offload card can obtain the rendered image from the GPU memory corresponding to the GPU and feedback the rendered image to the CPU for subsequent processing. This allows the target accelerator installed on the offload card to share the computational load of the CPU, and protects the CPU from the problem regarding scheduling difficulty caused by varied acceleration capabilities.

In a practical application, the offload card can store the data to be rendered into the GPU memory and instruct the GPU to obtain, from the GPU memory, the data to be rendered for rendering.

In an embodiment provided in the present specification, the offload card installed with the accelerator is in mutual communication with a CPU; and
the offload card is further configured to feedback the data processing result to the CPU.

For example, the offload card processes the data during the data processing process only through the offload card itself or the accelerator and returns a final processing result to the CPU for ultimate processing, thereby reducing the computational load on the CPU.

It should be noted that when the accelerator is installed on the offload card, the accelerator originally installed on the CPU will not be used and is in an OFF state, thereby ensuring the uniform performance of the CPU in the cloud computing scenario and protects the CPU from the problem regarding scheduling difficulty caused by varied acceleration capabilities.

In an embodiment provided in the present specification, the offload card installed with the accelerator is further configured to determine a memory corresponding to the CPU and store the data processing result into the memory to enable the CPU to obtain the data processing result from the memory.

Specifically, the offload card processes the data during the data processing process only through the offload card itself or the accelerator and returns a final processing result to the system memory, and the CPU can obtain, from the system memory, the data processed by the offload card or the accelerator, and perform ultimate processing thereon, thereby reducing the computational load on the CPU.

In an embodiment provided in the present specification, as for the offload card installed with the accelerator,
where the offload card is further configured to determine a memory corresponding to the CPU, and store the data processing result into the memory, and transmit storage information of the data processing result in the memory to the CPU, to enable the CPU to obtain the data processing result from the memory based on the storage information; or
the offload card is further configured to determine a memory corresponding to the CPU and store the data processing result into a preset storage area in the memory to enable the CPU to obtain the data processing result from the preset storage area in the memory.

Here, the storage information can be understood as a storage location of the data processing result in the memory; the preset storage area can be understood as a preset area in the memory specifically for storing the data processing result provided by the offload card to the CPU; and the CPU can periodically check this area and obtain a newly written data processing result therefrom.

Specifically, during a process where the offload card feeds back the data processing result to the CPU, it is necessary to determine a memory corresponding to the CPU and store the data processing result into the memory, and transmit storage information of the data processing result in the memory to the CPU; after receiving the storage information, the CPU can obtain, based on the storage information, the data processing result from the memory and perform subsequent processing.

Alternatively, during a process where the offload card feeds back the data processing result to the CPU, it is necessary to determine a memory corresponding to the CPU and a preset storage area in the memory for data transmission with the CPU, and store the data processing result into the preset storage area in the memory; and the CPU can obtain the data processing result from the preset storage area in the memory and perform subsequent processing.

Based on this, the offload card provides the data processing result to the CPU, thereby reducing the processing pressure on the CPU.

In an embodiment of the present specification, the offload card installed with the accelerator is in mutual communication with a CPU; and
the offload card is further configured to transmit the data to be processed to the CPU upon determining that a data type of the data to be processed satisfies a processing condition from the CPU.

In a practical application, the data type satisfying the processing condition from the CPU can be interpreted as the data type being consistent with a data type that the CPU can process. Alternatively, the data type may differ from a data type that the offload card or the accelerator can process.

Specifically, both the offload card and the accelerators installed thereon are used to relieve the processing pressure on the CPU. Image processing, I/O traffic offloading, data encryption/decryption and other original functions from the CPU can be implemented by the offload card and the accelerators installed thereon. This allows the CPU to handle more critical requests, such as user requests or web (World Wide Web, abbreviated as web, i.e., global wide area network, also known as 3W) requests.

Based on this, when receiving a data packet, the offload card determines that the data to be processed requires to be processed by the CPU, and transmits the data to be processed to the CPU to ensure the smooth operation of the CPU.

In an embodiment provided in the present specification, the offload card installed with the accelerator is further configured to determine the data type of the data to be processed, and the data types for processing by the at least two accelerators;
in a case that the data types for processing by the at least two accelerators match the data type of the data to be processed, determine that the data type of the data to be processed satisfies the processing condition from the accelerator; and
determine, from the at least two accelerators, an accelerator that processes the data to be processed in terms of the data type of the data to be processed, as a target accelerator.

Specifically, after receiving the data processing request carrying the data to be processed, the offload card determines the data type of the data to be processed and the data type for processing by each of the at least two accelerators, and matches the two. In a case that the data types for processing by the at least two accelerators match the data type of the data to be processed, the offload card determines that the data type of the data to be processed satisfies the processing condition from the accelerator, and it is necessary to transmit the data to be processed to the accelerator for processing. Based on this, the accelerator that processes the data to be processed in terms of its data type is determined from the at least two accelerators as the target accelerator. In this way, the data to be processed is accurately allocated to the corresponding accelerator for processing, and the data processing efficiency is improved.

The present specification provides an offload card installed with an accelerator. By installing at least two accelerators onto the offload card, it is possible to avoid a problem that it is difficult to regulate and control CPU resources since performance of the CPU may vary due to CPUs installed with different types of accelerators or installed with no accelerator. Moreover, upon determining that a data processing request carries data to be processed whose a data type satisfying a processing condition from the accelerator, the offload card transmits the data to be processed to a target accelerator, and feeds back a data processing result obtained by the target accelerator, therefore, the objections of improved performance of the CPU and reduced pressure for the CPU are achieved.

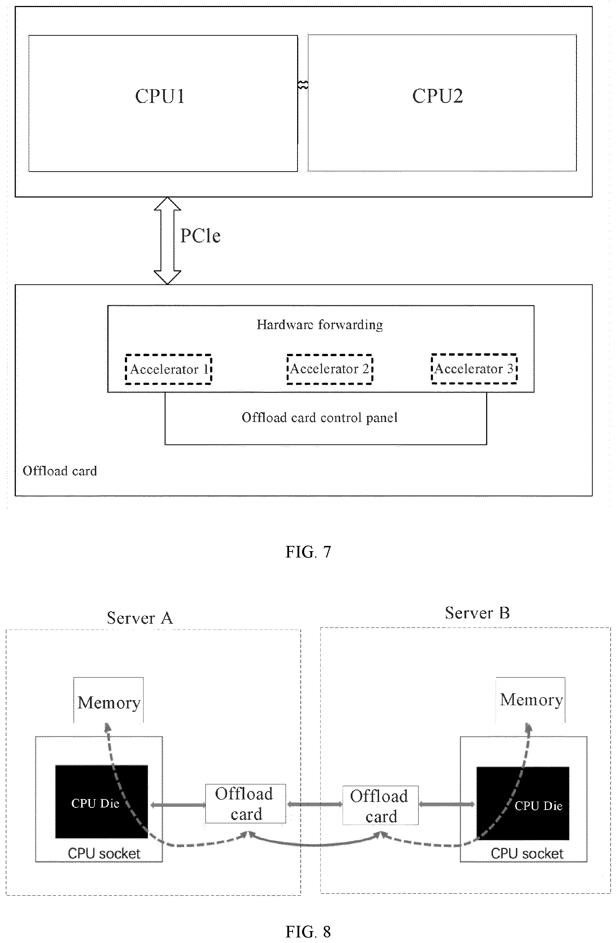

Reference is made to FIG. 7 and FIG. 8. FIG. 7 shows a schematic diagram of an interaction between an offload card installed with accelerators and a CPU according to an embodiment of the present specification. FIG. 8 shows a schematic application diagram of an offload card installed with accelerators according to an embodiment of the present specification. For explanations of the CPU and the offload card in FIG. 7, reference can be made to corresponding or relevant contents in explanations of FIG. 1. It can be seen from FIG. 7 that, in the offload card installed with accelerators according to the present specification, AMX accelerators, AI accelerators, ML engines, HPC accelerators, security coprocessors, GPUs and other accelerators can be offloaded to the offload card. As seen from FIG. 7, servers A and B perform communication through the offload card, and the offload card of the server A can communicate with the offload card of the server B through RoCE, InfiniBand, etc. Based on this, during packet reception or transmission by the offload card, the data will be processed through the at least two accelerators installed on the offload card, thereby data processing can be accomplished simply in the network card (that is, offload card) and finally the data processing result is returned to the system memory for ultimate processing by the CPU. This has the advantage of a short data link and supports different CPU platforms.

Based on the foregoing contents, it can be seen that the present scheme is a method for implementing acceleration of a general cloud-native chip. By offloading some hardware accelerators from various architecture CPUs to the offload card represented by the offload card, such as AMX accelerators, AI accelerators, ML engines, HPC accelerators, security coprocessors, GPUs (CPU manufacturers will consider embedding micro GPUs in CPUs in the future), etc., and removing these hardware accelerators from the cloud-native CPU chip, the burden of the HOST (host) CPU would be alleviated with focus on providing high computing power, therefore, this truly achieves a data-centric computing architecture where data is processed at a place where it is located (in situ), so that a series of benefits will be produced, including: unifying acceleration capabilities of different CPU platforms; and eliminating traffic detours and resource consumptions centered on the CPU.

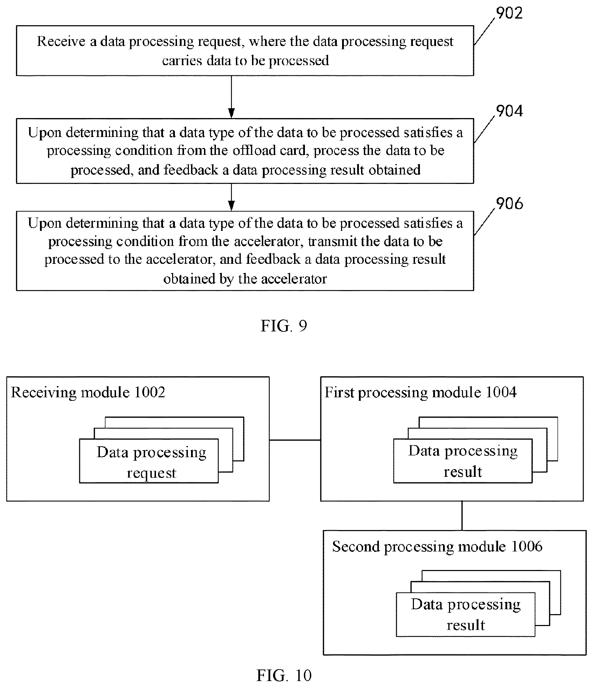

Reference is made to FIG. 9, which shows a flowchart of a data processing method according to an embodiment of the present specification. In particular, the following steps are included.

Step 902: receive a data processing request, where the data processing request carries data to be processed.

Step 904: upon determining that a data type of the data to be processed satisfies a processing condition from the offload card, process the data to be processed, and feedback a data processing result obtained.

Step 906: upon determining that a data type of the data to be processed satisfies a processing condition from the accelerator, transmit the data to be processed to the accelerator, and feedback a data processing result obtained by the accelerator.

For explanations of the data processing method, reference can be made to corresponding or relevant contents in explanations of an offload card installed with an accelerator, and no further elaboration will be given here.

The present specification provides a data processing data applied to an offload card installed with an accelerator. By installing the accelerator onto the offload card, it is possible to avoid a problem that it is difficult to regulate and control CPU resources since performance of the CPU may vary due to CPUs installed with different types of accelerators or installed with no accelerator. Moreover, upon determining that a data processing request carries data to be processed whose data type satisfies a processing condition from the accelerator, the offload card transmits the data to be processed to the accelerator, and feeds back a data processing result obtained by the accelerator, therefore, the objections of improved performance of the CPU and reduced pressure for the CPU are achieved.

The above description is for a schematic scheme of a data processing method according to the present embodiment. It should be noted that the technical solution of the data processing method is based on the same concept as the technical solution of the offload card installed with the accelerators. For any details not explicitly described in the technical solution of the data processing method, reference can be made to the description of the technical solution of the offload card installed with an accelerator described above.

Corresponding to the method embodiments described above, the present specification further provides an embodiment of a data processing apparatus. FIG. 10 is a schematic structural diagram of a data processing apparatus according to an embodiment of the present specification. As shown in FIG. 10, the apparatus is applied to an offload card installed with an accelerator, and the apparatus includes:
a receiving module 1002, configured to receive a data processing request, where the data processing request carries data to be processed; and
a first processing module 1004, configured to: upon determining that a data type of the data to be processed satisfies a processing condition from the offload card, process the data to be processed, and feedback a data processing result obtained; or
a second processing module 1006, configured to: upon determining that a data type of the data to be processed satisfies a processing condition from the accelerator, transmit the data to be processed to the accelerator, and feedback a data processing result obtained by the accelerator.

For explanations of the data processing apparatus, reference can be made to corresponding or relevant contents in explanations of the offload card installed with an accelerator described above, and no further elaboration will be given here.

The present specification provides a data processing apparatus applied to an offload card installed with an accelerator. By installing at least two types of accelerators onto the offload card, it is possible to avoid a problem that it is difficult to regulate and control CPU resources since performance of the CPU may vary due to CPUs installed with different types of accelerators or installed with no accelerator. Moreover, upon determining that a data processing request carries data to be processed that has a data type satisfying a processing condition from the accelerator, the offload card transmits the data to be processed to the accelerator, and feeds back a data processing result obtained by the accelerator, therefore, the objections of improved performance of the CPU and reduced pressure for the CPU are achieved.

The above description is for a schematic scheme of a data processing apparatus according to the present embodiment. It should be noted that the technical solution of the data processing apparatus is based on the same concept as the technical solution of the offload card installed with the accelerators. For any details not explicitly described in the technical solution of the data processing apparatus, reference can be made to the description of the technical solution of the offload card installed with an accelerator described above.

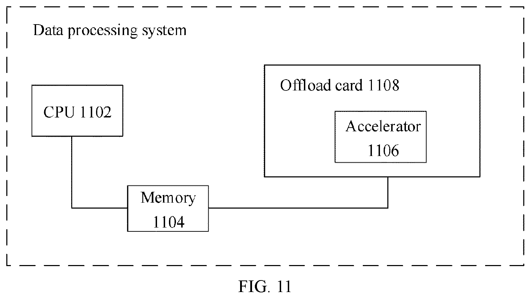

Corresponding to the method embodiments described above, the present specification further provides an embodiment of a data processing system. FIG. 11 shows a schematic structural diagram of a data processing system according to an embodiment of the present specification. As shown in FIG. 11, the system includes: a CPU 1102, a memory 1104, and an offload card 1108 installed with an accelerator 1106;
where the offload card 1108 is configured to: receive a data processing request, where the data processing request carries data to be processed; and upon determining that a data type of the data to be processed satisfies a processing condition from the offload card, process the data to be processed, and feedback a data processing result obtained to the memory 1104; or
upon determining that a data type of the data to be processed satisfies a processing condition from the accelerator, transmit the data to be processed to the accelerator 1106, and feedback a data processing result obtained by the accelerator 1106 to the memory 1104;
where the CPU 1102 is configured to obtain the data processing result from the memory 1104.

For explanations of the data processing system, reference can be made to corresponding or relevant contents in explanations of the offload card installed with an accelerator described above, and no further elaboration will be given here.

The present specification provides a data processing system. By installing the accelerator onto the offload card, it is possible to avoid a problem that it is difficult to regulate and control CPU resources since performance of the CPU may vary due to CPUs installed with different types of accelerators or installed with no accelerator. Moreover, upon determining that a data processing request carries data to be processed whose data type satisfies a processing condition from the accelerator, the offload card transmits the data to be processed to the accelerator, and feeds back a data processing result obtained by the accelerator to a memory, so that the CPU is able to obtain the data processing result from the memory, therefore, the objections of improved performance of the CPU and reduced pressure for the CPU are achieved.

The above description is for a schematic scheme of a data processing system according to the present embodiment. It should be noted that the technical solution of the data processing system is based on the same concept as the technical solution of the offload card installed with an accelerators described above. For any details not explicitly described in the technical solution of the data processing system, reference can be made to the description of the technical solution of the offload card installed with an accelerator described above.

An embodiment of the present specification further provides a computer-readable storage medium storing a computer-executable instruction, where when the computer-executable instruction is executed by a processor, steps of the data processing method applied to the offload card are implemented.

The above description is for a schematic scheme of a computer-readable storage medium according to the present embodiment. It should be noted that the technical solution of the storage medium is based on the same concept as the technical solution of the data processing method applied to an offload card described above. For any details not explicitly described in the technical solution of the storage medium, reference can be made to the description of the technical solution of the data processing method applied to the offload card described above.

An embodiment of the present specification further provides a computer program, where when the computer program is executed in a computer, the computer is enabled to perform steps of the foregoing data processing method applied to the offload card.

The above description is for a schematic scheme of a computer program according to the present embodiment. It should be noted that the technical solution of the computer program is based on the same concept as the technical solution of the data processing method applied to the offload card. For any details not explicitly described in the technical solution of the computer program, reference can be made to the description of the technical solution of the data processing method applied to the offload card.

Specific embodiments of the present specification have been described above. Other embodiments are subject to the scope of the appended claims. In some situations, actions or steps recited in the claims can be executed in an order different from that in the embodiments, but still achieve desirable results. Additionally, the processes depicted in the accompanying drawings do not necessarily require the specific order or sequential order shown to achieve the desirable results. In certain embodiments, multitasking and parallel processing are also possible or may be advantageous.

The computer instruction includes computer program codes, which can be in the form of source codes, object codes, executable files, or certain intermediate forms, etc. The computer-readable medium can include: any entity or apparatus, recording media, USB flash drive, mobile hard drive, magnetic disk, optical disk, computer memory, read-only memory (ROM, Read-Only Memory), random access memory (RAM, Random Access Memory), electrical carrier signal, telecommunication signal, software distribution medium and the like capable of carrying the computer program codes. It should be noted that the content included in the computer-readable medium can be appropriately increased or decreased according to the requirements of legislation and patent practice in the jurisdiction. For example, in some jurisdictions, according to legislation and patent practice, the computer-readable medium is exclusive of electrical carrier signals and telecommunication signals.

It should be noted that the foregoing method embodiments are expressed as a series of action combinations for the sake of simplified description; however, persons skilled in the art should know that the embodiments of the present specification are not limited to the described action sequence, that is because some steps may be performed in other sequences or performed simultaneously on the basis of the embodiments of the present specification. Next, persons skilled in the art should also know that the embodiments described in the specification are preferred embodiments, and the actions and modules involved are not necessary to the embodiments of the present specification.

In the foregoing embodiments, each embodiment is described with a different emphasis; and for the part not elaborated in an embodiment, reference may be made to related description in other embodiments.

The preferred embodiments of the present specification as disclosed above are only used to help illustrate the present specification. The optional embodiments do not exhaustively describe all the details, nor do they limit the invention to only the specific implementations. Obviously, various modifications and variations can be made based on the content of the embodiments of the present specification. These embodiments are selected and particularly described in the present specification to better explain the principles and practical applications of the embodiments of the present specification, so that those skilled in the art can understand and utilize the present specification in a good sense. The present specification is merely subject to the claims and the entire scope and equivalents thereof.

## Claims

1. An offload card installed with an accelerator, wherein the offload card is configured to:
receive a data processing request, wherein the data processing request carries data to be processed; and
upon determining that a data type of the data to be processed satisfies a processing condition from the offload card, process the data to be processed, and feedback a data processing result obtained; or
upon determining that a data type of the data to be processed satisfies a processing condition from the accelerator, transmit the data to be processed to the accelerator, and feedback a data processing result obtained by the accelerator.

2. The offload card installed with the accelerator according to claim 1, wherein there are at least two accelerators, and the at least two accelerators process a same type of data.

3. The offload card installed with the accelerator according to claim 1, wherein there are at least two accelerators, and the at least two accelerators process different types of data;
correspondingly, the offload card is further configured to transmit the data to be processed to a target accelerator, and feedback a data processing result obtained by the target accelerator, wherein the target accelerator is one of the at least two accelerators, and the target accelerator processes a same type of data as the data type of the data to be processed.

4. The offload card installed with the accelerator according to claim 3, wherein the offload card is further configured to:
determine a data memory cell corresponding to the target accelerator, wherein the data processing result obtained by the target accelerator is stored in the data memory cell, and the data processing result is obtained by the target accelerator by processing the data to be processed;
obtain the data processing result from the data memory cell and feedback the data processing result.

5. The offload card installed with the accelerator according to claim 1, wherein the offload card is in mutual communication with a CPU;
the offload card is further configured to feedback the data processing result to the CPU.

6. The offload card installed with the accelerator according to claim 5, wherein the offload card is further configured to determine a memory corresponding to the CPU and store the data processing result into the memory to enable the CPU to obtain the data processing result from the memory.

7. The offload card installed with the accelerator according to claim 6, wherein the offload card is further configured to determine a memory corresponding to the CPU, store the data processing result into the memory, and transmit storage information of the data processing result in the memory to the CPU, to enable the CPU to obtain the data processing result from the memory based on the storage information; or
the offload card is further configured to determine a memory corresponding to the CPU and store the data processing result into a preset storage area in the memory to enable the CPU to obtain the data processing result from the preset storage area in the memory.

8. The offload card installed with the accelerator according to claim 1, wherein the offload card is in mutual communication with a CPU;
the offload card is further configured to transmit the data to be processed to the CPU upon determining that a data type of the data to be processed satisfies a processing condition from the CPU.

9. The offload card installed with the accelerator according to claim 3, wherein the offload card is further configured to determine the data type of the data to be processed, and the data types for processing by the at least two accelerators;
in a case that the data types for processing by the at least two accelerators match the data type of the data to be processed, determine that the data type of the data to be processed satisfies the processing condition from the accelerator;
determine, from the at least two accelerators, an accelerator that processes the data to be processed in terms of the data type of the data to be processed, as a target accelerator.

10. The offload card installed with the accelerator according to any one of claim 2 or 3, wherein the data type for processing by the accelerator comprises an artificial intelligence type, a machine learning type, a graphics type, a data security type, a data computing type.

11. A data processing method, applied to an offload card installed with an accelerator, the method comprising:
receiving a data processing request, wherein the data processing request carries data to be processed; and
upon determining that a data type of the data to be processed satisfies a processing condition from the offload card, processing the data to be processed, and feeding back a data processing result obtained; or
upon determining that a data type of the data to be processed satisfies a processing condition from the accelerator, transmitting the data to be processed to the accelerator, and feeding back a data processing result obtained by the accelerator.

12. A data processing system, comprising: a CPU, a memory, and an offload card installed with an accelerator;
wherein the offload card is configured to:
receive a data processing request, wherein the data processing request carries data to be processed; and
upon determining that a data type of the data to be processed satisfies a processing condition from the offload card, process the data to be processed, and feedback a data processing result obtained to the memory; or
upon determining that a data type of the data to be processed satisfies a processing condition from the accelerator, transmit the data to be processed to the accelerator, and feedback a data processing result obtained by the accelerator to the memory;
wherein the CPU is configured to obtain the data processing result from the memory.
